# EUROPÄISCHE PATENTANMELDUNG

(11) **EP 0 818 484 A1**
(43) Veröffentlichungstag der Anmeldung: **14.01.1998**
(21) Anmeldenummer: 97108200.3
(22) Anmeldetag: 21.05.1997
(51) Int. Cl.: C08G 18/79, C08G 18/58, C09J 175/04

(54) **Wärmehärtende, abspalt- und lösemittelfreie Einkomponenten-Klebstoffe auf Basis von Polyurethanen, ein Verfahren zu ihrer Herstellung sowie deren Verwendung**

(30) Priorität: 13.07.1996 DE 19628327
(71) Anmelder: HÜLS AKTIENGESELLSCHAFT, 45764 Marl (DE)
(72) Erfinder: Wenning, Andreas, Dr., 48301 Nottuln (DE)

(57) **Zusammenfassung**

Die Erfindung betrifft Verbindungen, enthaltend
A) eine Härterkomponente, bestehend aus hydroxyl- und uretdiongruppenhaltigen Polyadditionsprodukten,
B) eine Bindemittelkomponente, bestehend aus 1,2-Epoxidverbindungen mit mehr als einer 1,2-Epoxidgruppe und einer oder mehrerer Hydroxylgruppen im Molekül,
C) Katalysatoren zur Polymerisation von Epoxidgruppen,
   gegebenenfalls
D) weitere hydroxylgruppenhaltige Verbindungen
   und gegebenenfalls
E) aus der Klebstofftechnologie bekannte Hilfs- und Zusatzmittel

Ferner betrifft die Erfindung ein Verfahren zur Herstellung dieser Verbindungen und deren Verwendung als wärmehartende, einkomponentige, abspalt- und lösemittelfreie sowie temperatur- und lösemittelbeständige Polyurethan (PUR)-Klebstoffe.

## Beschreibung

Die Erfindung betrifft die Verwendung hydroxyl- und uretdiongruppenhaltiger Polyadditionsprodukte zur Herstellung abspalt- und lösemitteifreier Polyurethane und die danach hergestellten, einkomponentigen, wärmehärtbaren Polyurethan (PUR)-Klebstoffe.

Polyurethan-Klebstoffe zeichnen sich generell durch sehr gute Haftungseigenschaften an den verschiedensten Werkstoffoberflächen, Beständigkeiten gegenüber Lösemitteln, Weichmachern, Fetten, Ölen und Wasser sowie durch die hohe Flexibilität der Klebschichten auch bei tiefen Temperaturen aus. Aufgrund der Vielseitigkeit der Polyurethanchemie kennt die Literatur - siehe z. B. G. Habenicht, Kleben - Grundlagen, Technologie, Anwendungen, Springer Verlag, Berlin, Heidelberg, New York, Tokyo, 1986 - eine Anzahl unterschiedlicher Typen von Polyurethan-Klebstoffen. Es werden Ein- und Zweikomponentensysteme unterschieden. Zweikomponentige Polyurethan-Klebstoffe sind im wesentlichen charakterisiert durch Polyisocyanate als Härter sowie vorwiegend oligomere Diole bzw. Polyole als Harz. Sie haben den Vorteil, daß sie hinsichtlich Lagerstabilität unkritisch sind und daß sich durch gezielte Auswahl und Reaktivität der Monomere Systeme mit unterschiedlichen Topfzeiten einstellen und klebschichtbestimmende Eigenschaften wie z. B. Festigkeit, Elastizität und Beständigkeit gegenüber chemischen Einflüssen steuern lassen. Aufgrund von Polyadditionsreaktionen werden bei diesen Klebstoffen während der Vernetzung keine Abspaltprodukte freigesetzt.

Der für die Verarbeitung von Zweikomponentensystemen erforderliche technische Aufwand hinsichtlich genauer Dosierung und Mischung der Komponenten hat dazu geführt, einfacher zu verarbeitende Einkomponentensysteme zu entwickeln. Sie enthalten Isocyanatoprepolymere, die aus höhermolekularen Polyolen mit einem stöchiometrischen Überschuß an Polyisocyanat hergestellt werden. Die Aushärtung geschieht zumeist durch Feuchtigkeitsvernetzung. Aus diesem Grund ist eine ausreichende Luftfeuchtigkeit (mindestens 40% rel. F.) in den Verarbeitungsräumen erforderlich. Für Verklebungen metallischer oder anderer für Feuchtigkeit undurchlässiger Fügeteile sind diese Klebstoffe daher nur bedingt einsetzbar. An die Verpackung dieser Einkomponenten-Klebstoffe müssen während Transport und Lagerung wegen des Feuchtigskeitsausschlusses hohe Anforderungen gestellt werden.

Eine Weiterentwicklung sind die nachvernetzenden Polyurethan-Schmelzklebstoffe (reaktive Hot Melts), die nach Applikation aus der Schmelze nach Abkühlung (physikalisch abbindend) eine spontane Anfangsfestigkeit bringen und anschließend durch Einwirkung weiterer Umgebungsluftfeuchtigkeit auf die noch vorhandenen reaktionsfähigen Isocyanatgruppen zum Klebschichtpolymer vernetzen.

Kritisch kann bei der Vernetzungsreaktion mittels Feuchtigkeit die Bildung von Kohlendioxid durch den Zerfall der instabilen Carbaminsäurederivate sein, vor allem dann, wenn dickere Klebstoffschichten mit höheren Viskositäten vorliegen und die Gasblasen in der Klebschicht eingeschlossen werden. Außerdem erreichen feuchtigkeitshärtende PUR-Klebstoffe nicht die Festigkeiten wie Zweikomponenten-PUR-Klebstoffe.

Eine Alternative zu den feuchtigkeitshärtenden Systemen stellen einkomponentige thermisch aktivierbare PUR-Klebstoffe dar. Sie bestehen aus Polyolharzen und Polyisocyanaten, deren Isocyanatgruppen durch sogenannte Blockierungsmittel inhibiert sind. Erhöhte Temperaturen führen zu einer Spaltung der Härtermoleküle. Dabei werden die Blockierungsmittel abgespalten, und durch Polyurethanbildung wird das Polymer generiert. Nachteilig ist auch hier die Bildung von Abspaltprodukten in Hinsicht auf Verschlechterung der Klebeigenschaften. Darüber hinaus sind die Blockierungsmittel aufgrund ihrer organischen Struktur toxikologisch z. T. nicht unbedenklich.

Polyurethane sind ebenfalls als lösungsmittelhaltige Klebstoffsysteme im Einsatz. Hierbei können physikalisch abbindende und chemisch reagierende Systeme unterschieden werden. Beide Systeme besitzen hochmolekulare Hydroxyl-Polyurethane als Polymere, wobei die chemisch reagierenden Systeme zusätzlich noch ein Polyisocyanat als zweite Komponente in dem Lösemittelsystem beinhalten. Zur Ausbildung der Klebschicht, die bei normaler oder höherer Temperatur erfolgen kann, ist die Entfernung des Lösemittels erforderlich.

Aus Umweltschutz- und klebtechnischen Gründen ist es jedoch wünschenswert, Klebstoffe bereitzustellen, die frei von Emissionen in Form von Lösemittel oder Abspaltungsprodukten wie Blockierungsmitteln sind.

Die der Erfindung zugrunde liegende Aufgabe bestand daher darin, neue PUR-Klebstoffe zu entwickeln, die nicht mit den genannten Nachteilen des Standes der Technik behaftet sind, d. h. die einkomponentig, blockierungsmittel- und lösemittelfrei sind und sich thermisch zu Duromeren vernetzen lassen. Darüber hinaus sollten die PUR-Klebstoffe nach der Härtung Verklebungen mit sehr guten Temperatur- und Lösemittelbeständigkeiten aufweisen.

Diese Aufgabe wurde gemäß der Patentansprüche gelöst. Nachfolgend wird die erfindungsgemäße Harz/Härter-Mischung, die als Härtungsmittel hydroxyl- und uretdiongruppenhaltige Polyadditionsprodukte enthält, beschrieben. Die Vernetzung der hydroxylgruppenhaltigen Harze verläuft über eine Urethanreaktion als auch über eine Polymerisation der Epoxidgruppen.

Gegenstand der vorliegenden Erfindung sind somit wärmehärtende, einkomponentige, abspalt- und lösemittelfreie Polyurethane, enthaltend
A) eine Härterkomponente, bestehend aus hydroxyl- und uretdiongruppenhaltigen Polyadditionsprodukten,
B) eine Bindemittelkomponente, bestehend aus 1,2-Epoxidverbindungen mit mehr als einer 1,2-Epoxidgruppe und einer oder mehrerer Hydroxylgruppen im Molekül,
C) Katalysatoren zur Polymerisation von Epoxidgruppen,
   gegebenenfalls
D) weitere hydroxylgruppenhaltige Verbindungen
   und gegebenenfalls
E) aus der Klebstofftechnologie bekannte Hilfs- und Zusatzmittel.

Die Härterkomponente A) ist erhältlich durch Umsetzung von
(i) Uretdionen auf Basis von Polyisocyanaten, insbesondere auf Basis aliphatischer und/oder cycloaliphatischer Diisocyanate mit mindestens zwei freien Isocyanatgruppen und
(ii) gegenüber Isocyanatgruppen reaktiven, difunktionellen und gegebenenfalls monofunktionellen Verbindungen, insbesondere Diolen und/oder Kettenverlängerern sowie gegebenenfalls Monoalkoholen oder Monoaminen,
   wobei die uretdiongruppenhaltigen Polyadditionsprodukte sowohl im Lösemittel als auch insbesondere lösemittelfrei dargestellt werden können,
die Katalysatoren C) sind cyclische Amidine der allgemeinen Formel 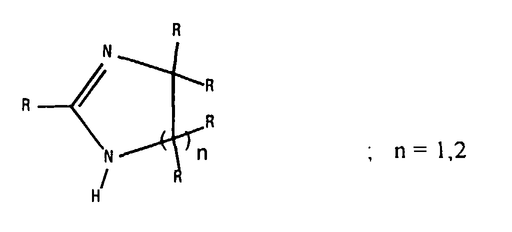 worin R gleiche oder verschiedene (Cyclo)alkylreste mit 1 bis 10 C-Atomen, Aralkyl- und Arylreste sind, und wobei der Gehalt an cyclischem Amidin 1 bis 10 Massen-%, vorzugsweise 2 bis 8 Massen-%, bezogen auf die Summe aus Harz und Härter, beträgt,
und/oder mit cyclischen Amidinen blockierte Polyisocyanate sind,
und daß die Bindemittelkomponente D) aus hydroxylgruppenhaltigen Verbindungen mit einer Molmasse von mindestens 60, einer OH-Zahl von mindestens 20 mg KOH/g und einer Hydroxylfunktionalität von mindestens 2 besteht.

Die Komponente D) ist in Mengen von 0 bis 99 Massen-%, bezogen auf die Komponente B), zugegen. Das Mischungsverhältnis aller hydroxylgruppenhaltigen Verbindungen und den hydroxyl- und uretdiongruppenhaltigen Polyadditionsprodukten (Vernetzern) wird im allgemeinen so gewählt, daß auf eine NCO-Gruppe 0,5 bis 10, bevorzugt 0,8 bis 5 OH-Gruppen kommen.

Gegenstand der Erfindung ist auch ein Verfahren zur Herstellung dieser wärmehärtenden, einkomponentigen, abspalt- und lösemittelfreien Polyurethane, enthaltend
A) eine Härterkomponente, bestehend aus hydroxyl- und uretdiongruppenhaltigen Polyadditionsprodukten,
B) eine Bindemittelkomponente, bestehend aus 1,2-Epoxidverbindungen mit mehr als einer 1,2-Epoxidgruppe und einer oder mehreren Hydroxylgruppen im Molekül,
C) Katalysatoren zur Polymerisation von Epoxidgruppen,
   gegebenenfalls
D) weitere hydroxylgruppenhaltige Verbindungen
   und gegebenenfalls
E) aus der Klebstofftechnologie bekannte Hilfs- und Zusatzmittel,
   der vorstehend genannten Art.

Weiterhin Gegenstand der Erfindung ist die Verwendung der erfindungsgemäßen Polyurethane als wärmehärtende, einkomponentige, abspalt- und lösemittelfreie Klebstoffe zur Verklebung von beliebigen hitzeresistenten Substraten, insbesondere zur Verklebung von Metallen.

Bei der Härterkomponente A) handelt es sich um Uretdiongruppen aufweisende Polyadditionsverbindungen. Die Uretdionprodukte, die zusätzlich zu den Uretdionen noch bis zu 40 Massen-% Trimere und höhere Oligomere enthalten können, basieren auf den Umsetzungsprodukten der Dimerisierung von Polyisocyanaten, besonders auf den Dimerisierungsprodukten aliphatischer und/oder cycloaliphatischer Diisocyanate. Als Diisocyanate kommen insbesondere 1,6-Diisocyanatohexan (HDI), 3-Methyl-1,5-diisocyanatopentan (MPDI), 2,2,4- bzw. 2,4,4-Trimethyldiisocyanatohexan (TMDI), 1-Isocyanato-3-isocyanatomethyl-3,5,5-trimethylcyclohexan (IPDI) und 4,4'-Diisocyanatodicyclohexylmethan (H₁₂MDI) oder beliebige Gemische dieser Diisocyanate zum Einsatz.

Die Herstellung solcher Uretdiongruppen aufweisender Polyadditionsverbindungen durch Umsetzung Uretdiongruppen aufweisender Polyisocyanate mit gegenüber Isocyanatgruppen reaktiven, difunktionellen und gegebenenfalls monofunktionellen Verbindungen, insbesondere Diolen und/oder Kettenverlängerern sowie gegebenenfalls Monoalkoholen oder Monoaminen ist prinzipiell bekannt und wird beispielsweise in den DE-PS 24 20 475, DE-PS 30 30 572, DE-PS 30 30 588, DE-PS 30 30 539, EP-PS 0 669 353 und EP-PS 0 669 354 beschrieben. Die als Härter verwendeten Uretdiongruppen aufweisenden Polyadditionsverbindungen weisen im allgemeinen einen Gesamt-NCO-Gehalt von 3 bis 26 % (ermittelt durch 30 bis 60 minütiges Erhitzen der Verbindungen auf 180 °C) auf. Dieser sogenannte "Heißwert" ist ein direktes Maß für den Gehalt an Uretdiongruppen im Reaktionsprodukt. Der Schmelzpunkt dieser Verbindungen liegt im allgemeinen innerhalb des Bereiches von 40 bis 130 °C.

Bei der Bindemittelkomponente B) handelt es sich um beliebige, mindestens zwei Epoxidgruppen, d. h. vorzugsweise 1,2-Epoxidgruppen aufweisende aliphatische, cycloaliphatische, aromatische oder heterocyclische Verbindungen mit einer oder mehrere Hydroxylgruppen im Molekül.

Die bevorzugten als Komponente B) geeigneten hydroxylgruppenhaltigen Epoxidharze weisen Epoxidäquivalentgewichte von ca. 800 bis 3 500 und OH-Äquivalentgewichte von 300 bis 250 auf.

Die Herstellung der Epoxidharze erfolgt nach bekannten Verfahren z. B. durch Umsetzung von Bisphenol A mit Epichlorhydrin. Die dabei erhaltenen Produkte weisen Kondensationsgrade zwischen 0 und 27, entsprechend einer Molmasse von 380 bis 8 000, auf.

Die als Katalysatoren C) einsetzbaren cyclischen Amidine werden in den DE-OSS 22 48 776 und 28 35 029 beschreiben. Besonders geeignet sind 2-Phenylimidazolin, 2-Phenyl-4-methylimidazolin sowie 2,4-Dimethylimidazolin.

Die Katalysatoren können auch an Verbindungen chemisch blockiert vorliegen. Bei den Ausgangsverbindungen, die zur Blockierung mit den cyclischen Amidinen eingesetzt werden können, handelt es sich um beliebige Polyisocyanate der Polyurethanchemie mit aliphatisch, cycloaliphatisch und/oder aromatisch gebundenen Isocyanatgruppen. Beispielsweise werden solche Polyisocyanate, insbesondere Diisocyanate, im Houbel-Weyl, Methoden der organischen Chemie, Bd. 14/2, S. 61 bis 70 oder in Liebigs Annalen der Chemie 562, S. 75 bis 136 beschrieben. Besonders bevorzugt werden in der Regel die technisch leicht zugänglichen aliphatischen und cycloaliphatischen Diisocyanate, wie 1,6-Diisocyanatohexan (HDI), 3-Methyl-1,5-diisocyanatopentan (MPDI), 2,2,4- bzw. 2,4,4-Trimethyldiisocyanatohexan (TMDI), 1-Isocyanato-3-isocyanatomethyl-3,5,5-trimethylcyclohexan (IPDI) und 4,4'-Diisocyanatodicyclohexylmethan (H₁₂MDI) oder beliebige Gemische dieser Diisocyanate.

Unter Polyisocyanate im Sinne der Erfindung werden auch solche verstanden, die vor der Blockierung einer Umsetzung zur Molekülvergrößerung mit den in der Isocyanatchemie gebräuchlichen Kettenverlängerungsmitteln, wie Wasser, Polyolen und Polyaminen, unterworfen wurden. Dabei wurde das Kettenverlängerungsmittel in unterschüssiger Menge zum Diisocyanat eingesetzt, d. h. das Reaktionsprodukt enthielt im Durchschnitt mindestens zwei NCO-Gruppen.

Auch eine Molekülvergrößerung der beispielhaft genannten Polyisocyanate, vor allem der einfachen Diisocyanate, insbesondere jene mit aliphatisch und/oder cycloaliphatisch gebundenen Isocyanatgruppen, durch Dimerisierung, Trimerisierung, Carbodiimidisierung und Allophanatbildung sowie Biuretisierung, wie sie z B. in der DE-OS 29 29 150 beschrieben wird, ist möglich.

Die Blockierung der Polyisocyanate erfolgt in Analogie zu der in der DE-PS 27 29 704 beschriebenen Herstellung von blockierten Polyisocyanaten.

Als Bindemittelkomponente D) eignen sich Verbindungen mit funktionellen Gruppen, die sich mit Isocyanatgruppen während des Härtungsprozesses in Abhängigkeit von der Temperatur und Zeit umsetzen lassen, z. B. Hydroxyl-, Carboxyl-, Mercapto-, Amino-, Urethan-, (Thio)-Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Aminoplaste und ihre Modifizierungsprodukte mit polyfunktionellen Alkoholen, Polyazomethine, Polysulfonamide, Acrylatharze, Melaminabkömmlinge, Celluloseester und -ether, Polyharnstoffe, insbesondere aber Polyole, Polyester und Polyurethane.

Geeignete Polyole sind z. B. Ethylenglykol, Propylengykol-1,2 und -1,3, Butylenglykol-1,4 und -2,3, Di-β-hydroxybutandiol, Hexandiol-1,6, Heptandiol-1,7, Octandiol-1,8, Dodecandiol-1,12, Octadecandiol-1,18, Neopentylgtykol, Cyclohexandiol, Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 3-Methylpentandiol-1,5, 2,2,4- bzw. 2,4,4-Trimethylhexandiol-1,6, Glycerin, 1,1,1-Trimethylolpropan, 1,1,1-Trimethylolethan, Hexantriol-1,2,6, Butantriol-1,2,4, Tris-(β-hydroxyethyl)-isocyanurat, Pentaerythrit, Mannit, Sorbit sowie Diethylenglykol, Triethylenglykol, Tetraethylenglykol, Dipropylenglykol, Polypropylenglykole, Polybutylenglykole, Xylylenglykole und Hydroxypivalinsäureneopentylglykolester. Selbstverständlich können auch Gemische mehrerer Polyhydroxylverbindungen eingesetzt werden.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beipiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Dodecandi-, Dimerfett-, Glutar-, Malein- und Fumarsäure bzw. - soweit zugänglich - deren Anhydride, Terephthalsäuredimethylester und Terephthalsäure-bis-glykolester.

Als mehrwertige Alkohol-Komponente zur Darstellung der Polyester kommen die vorstehend beispielhaft genannten Polyole in Frage.

Polyester aus Lactonen oder Hydroxycarbonsäuren können ebenfalls eingesetzt werden.

Bei der Herstellung der Polyesterpolyole sind selbstverständlich beliebige Gemische der beispielhaft genannten Carbonsäuren bzw. deren Anhydride oder Ester oder beliebige Gemische der beispielhaft genannten mehrwertigen Alkohole einsetzbar.

Wesentlich im Sinne der Erfindung ist, daß die hydroxylgruppenhaltigen Polyester in der Bindemittelkomponente D) vorzugsweise aus zwei Typen mit unterschiedlichen Charakteristika bestehen können. Bevorzugte Polyester vom Typ I haben eine OH-Funktionalität von 2,0 bis 5,0, vorzugsweise von 2,0 bis 4,0, eine OH-Zahl von 20 bis 200 mg KOH/g, vorzugsweise von 30 bis 150 mg KOH/g, eine Molmasse von 1 500 bis 30 000, vorzugsweise von 2 000 bis 7 000, eine Viskosität bei 130 °C von < 300 000 mPa·s, einem Schmelz- bzw. Fließpunkt bis ca. 230 °C und einer Glasübergangstemperatur (T_{g}) von -80 bis 120 °C. Die Morphologie der Polyester reicht von amorph bis kristallin.

Bevorzugte hydroxylgruppenhaltige Polyester vom Typ II weisen eine OH-Funktionalität von 2,0 bis 5,0, eine OH-Zahl von 100 bis 600 mg KOH/g, vorzugsweise 100 bis 400 mg KOH/g, und eine Molmasse von 100 bis 2 000 auf

Gegebenenfalls besitzten die Polyester beider Typen noch Säurezahlen bis etwa 35 mg KOH/g.

Die Polyester können in bekannter Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Houben-Weyl, Methoden der Organischen Chemie, Bd. 14/2, 1-5, 21, 23, 40, 44, Georg Thieme Verlag, Stuttgart, 1963 oder bei C. R. Martens, Alkyd Resins, 51 - 59, Reinhold Plastics Appl. Series, Reinhold Publishing Comp., New York, 1961, beschrieben ist.

Die Polyurethanpolyole sind Umsetzungsprodukte aus
(i) einer Polyisocyanat-Komponente bestehend aus mindestens einem organischen Polyisocyanat mit
(ii) einer Polyol-Komponente bestehend aus mindestens einem 2- bis 6-wertigen Alkohol, der gegebenenfalls Ester-, Ether- und/oder Acrylatbindungen aufweist.

Als Polyisocyanat (i) kommen sowohl aromatische als auch insbesondere (cyclo)aliphatische Diisocyanate wie 1,6-Diisocyanatohexan (HDI), 3-Methyl-1,5-diisocyanatopentan (MPDI), 2,2,4- bzw. 2,4,4-Trimethyldiisocyanatohexan (TMDI), 1-Isocyanato-3-isocyanatomethyl-3,5,5-trimethylcyclohexan (IPDI) und 4,4'-Diisocyanatodicyclohexylmethan (H₁₂MDI) in Betracht. Auch eine Molekülvergrößerung der beispielhaft genannten Polyisocyanate durch Dimerisierung, Trimerisierung, Carbodiimidisierung, Allophanatbildung und Biuretisierung, wie sie z. B. in der DE-OS 29 29 150 beschrieben wird, ist möglich. Selbstverständlich können bei der Herstellung der Polyurethanpolyole beliebige Gemische der beispielhaft genannten Polyisocyanate eingesetzt werden.

Typische Beispiele mehrwertiger Alkohole (ii) ohne zusätzliche funktionelle Gruppen sind z. B. Ethylenglykol, Propylengykol-1,2 und -1,3, Butylenglykol-1,4 und -2,3, Di-β-hydroxybutandiol, Hexandiol-1,6, Heptandiol-1,7, Octandiol-1,8, Dodecandiol-1,12, Octadecandiol-1,18, Neopentylglykol, Cyclohexandiol, Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 3-Methylpentandiol-1,5, 2,2,4- bzw 2,4,4-Trimethylhexandiol-1,6, Glycerin, 1,1,1-Trimethylolpropan, 1,1,1-Trimethylolethan, Hexantriol-1,2,6, Butantriol-1,2,4, Tris-(β)-hydroxyethyl)-isocyanurat, Pentaerythrit, Mannit, Sorbit sowie Diethylenglykol, Triethylenglykol, Tetraethylenglykol, Dipropylenglykol, Polypropylenglykole, Polybutylenglykole, Xylylenglykole und Hydroxypivalinsäureneopentylglykolester. Selbstverständlich können auch Gemische mehrerer Polyhydroxylverbindungen eingesetzt werden.

Beispiele geeigneter Polyesterpolyole (ii) sind insbesondere die in der Polyurethanchemie an sich bekannten Umsetzungsprodukte von mehrwertigen Alkoholen der vorstehend genannten Art mit Polycarbonsäuren. Geeignete Polycarbonsäuren können aliphatischer, cycloaliphatischer, aromatischer und/oder heterocyclischer Natur sein und gegebenenfalls durch Halogenatome substituiert und/oder ungesättigt sein. Als Beipiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Dodecandi-, Dimerfett-, Glutar-, Malein- und Fumarsäure bzw. - soweit zugänglich - deren Anhydride, Terephthalsäuredimethylester und Terephthalsäure-bis-glykolester. Polyester in Form von Lactonen oder Hydroxycarbonsäuren können ebenfalls eingesetzt werden. Bei der Herstellung der Polyesterpolyole sind selbstverständlich beliebige Gemische der beispielhaft genannten mehrwertigen Alkohole oder beliebige Gemische der beispielhaft genannten Carbonsäuren bzw. deren Anhydride oder Ester einsetzbar.

Geeignete Polyetherpolyole (ii) sind die aus der Polyurethanchemie an sich bekannten Ethoxylierungs- und/oder Propoxylierungsprodukte geeigneter 2- bis 4-wertiger Startermoleküle wie z. B. Wasser, Ethylenglykol, Propylenglykol-1,2 und -1,3, 1,1,1-Trimethylolpropan, Glycerin und/oder Pentaerythrit.

Bei den Polyhydroxypolyacrylaten (ii) handelt es sich um an sich bekannte Mischpolymerisate von einfachen Estern der Acrylsäure und/oder Methacrylsäure und gegebenenfalls Styrol, wobei zwecks Einführung der Hydroxylgruppen Hydroxyalkylester, wie beispielsweise die 2-Hydroxyethyl-, 2-Hydroxypropyl-, 2-, 3-, 4-Hydroxybutylester, dieser Säuren mitverwendet werden.

Die Polyhydroxypolyester, wie oben beschrieben, Polyhydroxypolyether und Polyhydroxypolyacrylate weisen im allgemeinen eine Hydroxylzahl von 20 bis 200 mg KOH/g auf, vorzugsweise von 50 bis 130 mg KOH/g, bezogen auf 100%ige Produkte.

Die Herstellung der Polyurethanpolyole erfolgt vorzugsweise in inerten Lösemittein, wie z. B. Ketonen, bei Temperaturen von 20 bis 90 °C. Die Mengen der Reaktionspartner entsprechen dabei im allgemeinen einem NCO/OH-Verhältnis von 1 : 1,4 bis 1 : 15.

Die beispielhaft genannten Polyole und hydroxylgruppenhaltigen Polyester und Polyurethane können in beliebigen Verhältnissen miteinander gemischt und mit der Härterkomponente A), der Bindemittelkomponente B) und den Katalysatoren C) umgesetzt werden.

Bei der Herstellung der erfindungsgemäßen Klebstoffe können erforderlichenfalls die im Klebstoffsektor üblichen Hilfs- und Zusatzmittel, wie Katalysatoren, Haftvermittler, Haftharze, Verlaufsmittel, Füllstoffe, Pigmente, Farbstoffe, UV- und Oxidationsstabilisatoren Verwendung finden.
Die Härterkomponente A) wird für die Herstellung der erfindungsgemäßen PUR-Klebstoffe mit den hydroxylgruppenhaltigen Polymeren B) und D) und den Katalysatoren zur Polymerisation der Epoxidgruppen C) und gegebenenfalls weiteren Hilfs- und Zusatzmitteln E) entweder in einem inerten Lösemittel, wie z. B. Aceton oder Methylethylketon, homogenisiert oder nach dem Mahlen gemischt und in der Schmelze homogenisiert. Bei einer Homogenisierung im Lösemittel wird das Lösemittel destillativ im Vakuum entfernt. Das erhaltene Produkt wird nun mit einer Mühle auf eine Korngröße kleiner 500 µm gemahlen. Die Homogenisierung in der Schmelze kann in geeigneten Aggregaten, wie z. B. beheizbaren Knetern oder Extrudern, erfolgen, wobei Temperaturobergrenzen von 150 °C nicht überschritten werden sollten. Die geknetete bzw. extrudierte Masse wird nach Abkühlen auf Raumtemperatur geeignet zerkleinert und mit einer Mühle kleiner 500 µm gemahlen.

Bei der Herstellung des Bindemittels muß darauf geachtet werden, daß der cyclische Amidingehalt 1 bis 10 Massen-%, vorzugsweise 2 bis 8 Massen-%, bezogen auf die Summe aus Harz und Härter, beträgt. Der Katalysatoranteil muß also so gewählt werden, daß sein cyclischer Amidingehalt zur katalytischen Härtung des EP-Harzes ausreicht (Polymerisation der Epoxidgruppen), Gleichzeitig wird eine Vernetzung der hydroxylgruppenhaltigen Verbindungen mit den bei der Härtungstemperatur deblokkierten Isocyanatgruppen des Härters erreicht. Bei dieser Urethanreaktion bleiben allerdings die Epoxidgruppen intakt.

Die Applikation des einkomponentigen Klebstoffs auf die zu verklebenden Substrate kann z. B. durch Aufsieben, elektrostatisches Pulversprühen, Wirbelsintern, elektrostatisches Wirbelsintern oder Aufschmelzen erfolgen. Nach dem Auftrag der erfindungsgemäßen Klebstofformulierung aufdie gereinigten Oberflächen der Fügeteile wird die Verklebung gegebenenfalls z. B. mit geeigneten Werkzeugen oder einem Gewicht fixiert. Die Aushärtung der beschichteten Werkstücke erfolgt bei 150 bis 220 °C innerhalb von 60 bis 4 Minuten, vorzugsweise 160 bis 200 °C innerhalb von 30 bis 6 Minuten.

Die erfindungsgemäßen Harz/Härter-Systeme können z. B. als Beschichtungsmittel für unterschiedliche Substrate oder bevorzugt als Klebstoff, insbesondere als einkomponentige PUR-Klebstoffe zum Verkleben verschiedenster Werkstoffe, z. B. Metalle, Leichtmetalle, aber auch nichtmetallische Werkstoffe wie Glas, Keramik oder Kunststoff verwendet werden. Die verwendeten Substrate müssen hitzebeständig sein.

Die erfindungsgemäßen wärmehärtenden PUR-Klebstoffe ergeben Verklebungen mit ausgezeichneter Temperaturbelastbarkeit nach dem Zugscherversuch bei variabel einstellbarer Flexibilität. Die Klebstoffe sind ökologisch äußerst vorteilhaft, da sie lösemittelfrei sind und bei der Härtung keine Abspaltprodukte freisetzen. Darüber hinaus zeichnen sich die erfindungsgemäßen Beschichtungen durch eine hervorragende Lösemittelbeständigkeit gegenüber aggressiven Lösemitteln, wie z. B. Methylethylketon, aus.

Nachfolgend wird der Gegenstand der Erfindung anhand von Beispielen näher erläutert.

Die in den Beispielen verwendeten Abkürzungen haben die nachstehend wiedergegebenen Bedeutungen:
- As: = Adipinsäure
- DMPS: = Dimethylolpropionsäure
- HD: = 1,6-Hexandiol
- IPS: = Isophthalsäure
- NPG: = Neopentylglykol (2,2-Dimethylpropandiol-1,3)
- P: = Pentandiol-1,5
- TMHD: = Trimethylhexandiol
- TMP: = 1,1,1-Trimethylolpropan

### A) Herstellung der hydroxyl- und uretdiongruppenhaltigen Polyadditionsprodukte

Die Produktion der hydroxyl- und uretdiongruppenhaltigen Polyadditionsprodukte erfolgt nach bekanntem Verfahren. Die physikalischen und chemischen Kenndaten einer als Härter beispielhaft verwendeten Verbindung sowie deren molare Zusammensetzungen ist in der Tabelle 1 zusammengefaßt.
Das als Beispiel für Uretdione nach bekanntem Verfahren hergestellte IPDI-Uretdion hat folgende NCO-Kenndaten:

| | |
|---|---|
| frei: | 16,8 bis 18,5 Massen-% |
| gesamt: | 37,5 bis 37,8 Massen-% |

Der als Beispiel aufgeführte Kettenverlängerer aus 1 mol Adipinsäure und 2 mol Neopentylglykol weist eine OH-Zahl von 335 ± 15 mg KOH/g und eine Viskosität bei 25 °C von ca. 1 500 mPa·s auf

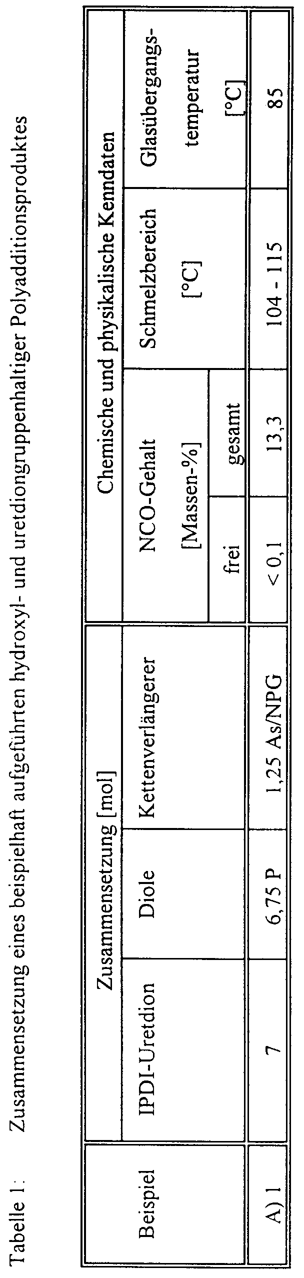

### B) Hydroxylgruppenhaltige Verbindungen

Die folgende Tabelle 2 gibt einen Überblick über die zur Formulierung von PUR-Klebstoffen eingesetzten Polyole, hydroxylgruppenhaltigen

**Tabelle 2**

| Verwendete hydroxylgruppenhaltige Verbindungen | | | | | |
|---|---|---|---|---|---|
| Beispiel | Hersteller/Land | Bezeichnung | Chemische und physikalische Kenndaten | | |
| | | | OH-Zahl [mg KOH/g] | Säurezahl [mg KOH/g] | Schmelzbereich [°C] |
| B) 1 | Shell/BRD | Epikote® 1004 | 185 | 0 | 90 - 100 |
| B) 2 | Shell/BRD | Epikote® 1007 | 193 | 0 | 120 - 130 |
| B) 3 | Shell/BRD | Epikote® 1009 | 216 | 0 | 140 - 155 |
| B) 4 | Hüls/BRD | DYNACOLL® 7130 | 31 - 39 | < 2 | - |
| B) 5 | Hüls/BRD | Polyesterpolyol¹⁾ | 104 | < 1 | - |
| B) 6 | Hüls/BRD | Polyurethanpolyol²⁾ | 76 | 15 | - |

| | | | | | |
|---|---|---|---|---|---|
| ¹⁾ IPS/HD/TMP/TMHD (7:5:2:1), | | | | | |
| ²⁾ IPDI/trimeres IPDI/TMP/DMPS/Oxyester T 1136 (Hüls AG) (2:1:2:1:2); in Klammern ist die molare Zusammensetzung angegeben | | | | | |

### C) Polyurethan-Klebstoffe

### Darstellung eines chemisch gebundenen Katalysators

Zu einer acetonischen Lösung von Isophorondiisocyanat (IPDI) und Dibutylzinndilaurat (0,05 Massen-% bezogen auf Feststoff) wird bei einer Temperatur von ca. 50 °C 2-Phenylimidazolin zugegeben. Es wird so lange gerührt, bis der NCO-Gehalt unter 0,5 Massen-% gefallen ist. Das Lösungsmittel wird im Vakuum entfernt.

### Allgemeine Herstellungsvorschrift der erfindungsgemäßen Klebstoffe im Lösemittel

Das hydroxyl- und uretdiongruppenhaltige Polyadditionsprodukt, die hydroxylgruppenhaltige Verbindungen, 2-Phenylimidazolin (Beispiel C) 1) bzw. 2-Phenylimidazolin blockiertes Isophorondiisocyanat (Beispiel C) 2) als Katalysatoren zur Polymerisation der Epoxidgruppen und gegebenenfalls Hilfs- und Zusatzstoffe werden in einem inerten Lösemittel wie z. B. Aceton gelöst. Nach dem Erhalt einer homogenen Lösung wird das Lösemittel im Vakuum entfernt, der Feststoff zerkleinert und in einer Mühle auf eine Korngröße < 500 µm gemahlen. Es schließt sich eine Nachtrocknung der Substanz bis zur Gewichtskonstanz an.

### Applikation der erfindungsgemäßen Klebstoffe

Die erfindungsgemäßen Klebstofformulierungen werden auf die entfetteten und aufgerauhten Normalstahlbleche (St 1405) über ein 100 m Sieb aufgebracht.
Alternativen dazu stellen das elektrostatische Pulverspritzen, das Wirbelsintern und das elektrostatische Wirbelsintern und das Aufschmelzen bzw. Anschmelzen der Verbindungen dar.

Die Verklebungen werden nach der DIN EN 1465 durchgeführt. Die Zugscherfestigkeiten dieser bei unterschiedlichen Temperaturen in einem Umlufttrockenschrank gehärteten Metallverklebungen sowie die Zugscherfestigkeiten der Verklebungen nach Lagerung in Methylethylketon (MEK) sind in der Tabelle 3 aufgeführt. Zur Illustration sind die Vergleichsbeispiele der Verklebungen, die keinen Katalysator zur Polymerisation der Epoxidgruppen enthalten, mit aufgeführt.

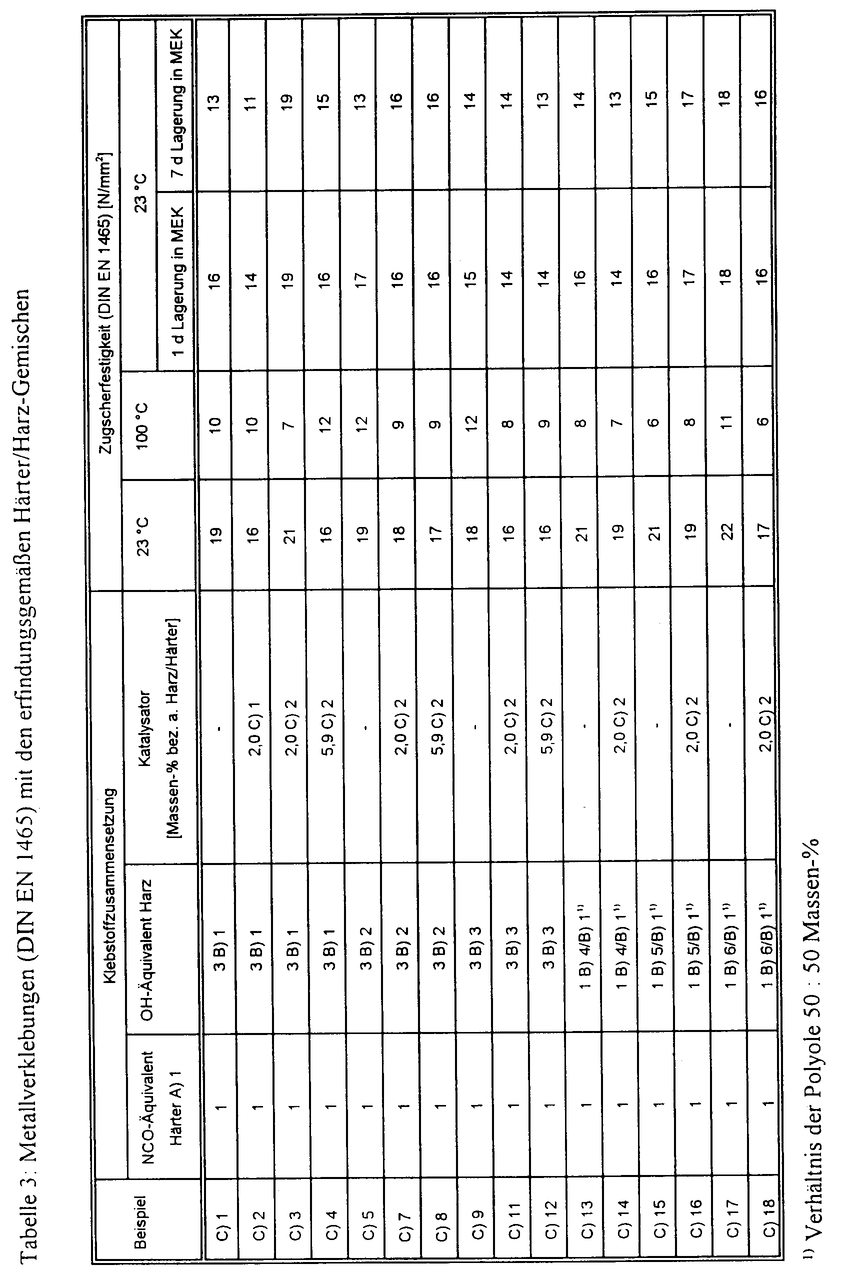

## Patentansprüche

1. Wärmehärtende Einkomponenten-Klebstoffe auf Basis von Polyurethanen mit gegebenenfalls aus der Klebstofftechnologie bekannten Hilfs- und Zusatzmitteln,
dadurch gekennzeichnet,
daß die Klebstoffe eine Mischung aus
A) einer Härterkomponente, bestehend aus hydroxyl- und uretdiongruppenhaltigen Polyadditionsprodukten,
B) einer Bindemittelkomponente, bestehend aus 1,2-Epoxidverbindungen mit mehr als einer 1,2-Epoxidgruppe und einer oder mehrerer Hydroxylgruppen im Molekül,
C) Katalysatoren zur Polymerisation von Epoxidgruppen,
und gegebenenfalls
D) weiteren hydroxylgruppenhaltigen Verbindungen
enthalten.

2. Einkomponenten-Klebstoffe nach Anspruch 1,
dadurch gekennzeichnet,
daß die Härterkomponente A) erhältlich ist durch Umsetzung von (i) Uretdionen aus Basis von Polyisocyanaten mit mindestens zwei freien Isocyanatgruppen und (ii) gegenüber Isocyanatgruppen reaktiven, difunktionellen und gegebenenfalls monofunktionellen Verbindungen.

3. Einkomponenten-Klebstoffe nach einem der vorherigen Ansprüche,
dadurch gekennzeichnet,
daß als Polyisocyanate zur Herstellung der Härterkomponente A) aliphatische und/oder cycloaliphatische Diisocyanate eingesetzt werden.

4. Einkomponenten-Klebstoffe nach einem der vorherigen Ansprüche,
dadurch gekennzeichnet,
daß als Polyisocyanat zur Herstellung der Härterkomponente A) das Uretdion des Isophorondiisocyanates (IPDI) eingesetzt wird.

5. Einkomponenten-Klebstoffe nach einem der vorherigen Ansprüche,
dadurch gekennzeichnet,
daß als gegenüber Isocyanatgruppen reaktiven Verbindungen zur Herstellung der Härterkomponente A) Diole und/oder Kettenverlängerer sowie Monoalkohole und/oder Monoamine eingesetzt werden.

6. Einkomponenten-Klebstoffe nach einem der vorherigen Ansprüche,
dadurch gekennzeichnet,
daß als Bindemittelkomponente B) 1,2-Epoxidverbindungen auf Basis von Bisphenol A und Epichlorhydrin mit Kondensationsgraden zwischen 0 und 27, entsprechend einer Molmasse von 380 und 8 000, eingesetzt werden.

7. Einkomponenten-Klebstoffe nach einem der vorherigen Ansprüche,
dadurch gekennzeichnet,
daß als Katalysatoren zur Polymerisation von Epoxidgruppen C) cyclische Amidine der allgemeinen Formel 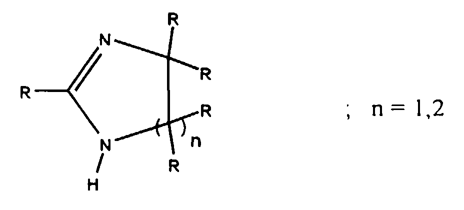 worin R gleiche oder veschiedene (Cyclo)alkylreste mit 1 bis 10 C-Atomen, Aralkyl- und Arylreste sind, und wobei der Gehalt an cyclischem Amidin 1 bis 10 Massen-%, vorzugsweise 2 bis 8 Massen-%, bezogen auf die Summe aus Harz und Härter, beträgt,
und/oder mit diesen cyclischen Amidinen blockierte Polyisocyanate eingesetzt werden.

8. Einkomponenten-Klebstoffe nach einem der vorherigen Ansprüche,
dadurch gekennzeichnet,
daß als Katalysatoren 2-Phenylimidazolin, 2-Phenyl-4-methylimidazolin sowie 2,4-Dimethylimidazolin eingesetzt werden.

9. Einkomponenten-Klebstoffe nach einem der vorherigen Ansprüche,
dadurch gekennzeichnet,
daß als Katalysatoren die Addukte aus 1 mol Isophorondiisocyanat (IPDI) und 2 mol 2-Phenylimidazolin, 1 mol Isophorondiisocyanat (IPDI) und 2 mol 2-Phenyl-4-methylimidazolin sowie 1 mol Isophorondiisocyanat (IPDI) und 2 mol 2,4-Dimethylimidazolin eingesetzt werden.

10. Einkomponenten-Klebstoffe nach einem der vorherigen Ansprüche,
dadurch gekennzeichnet,
daß hydroxylgruppenhaltige Verbindungen D) mit einer Molmasse von mindestens 60, einer OH-Zahl von mindestens 20 mg KOH/g und einer Hydroxylfunktionalität von mindestens 2 eingesetzt werden.

11. Einkomponenten-Klebstoffe nach einem der vorherigen Ansprüche,
dadurch gekennzeichnet,
daß als hydroxylgruppenhaltige Verbindungen D) Polyole, Polyester und Polyurethane eingesetzt werden.

12. Einkomponenten-Klebstoffe nach einem der vorherigen Ansprüche,
dadurch gekennzeichnet,
daß die Homogenisierung der Ausgangsprodukte in inerten Lösemitteln, die nach erfolgter Reaktion entfernt werden, oder lösemittelfrei im Kneter oder im Extruder, bei Temperaturen bis 150 °C erfolgt.

13. Einkomponenten-Klebstoffe nach einem der vorherigen Ansprüche,
dadurch gekennzeichnet,
daß ein OH/NCO-Verhältnis von 0,5 bis 10, vorzugsweise 0,8 bis 5 vorliegt.

14. Einkomponenten-Klebstoffe nach einem der vorherigen Ansprüche,
dadurch gekennzeichnet,
daß den PUR-Klebstoffen Katalysatoren zugesetzt werden, bevorzugt organische Zinnverbindungen, in einer Konzentration von 0,01 bis 1 Massen-%, vorzugsweise 0,01 bis 0,5 Massen-%, unter Einbeziehung der bereits enthaltenen Katalysatormenge in der Härterkomponente A).

15. Verwendung der PUR-Klebstoffe nach einem der vorherigen Ansprüche zum Verkleben beliebiger hitzeresistenter Substrate.

16. Verwendung der PUR-Klebstoffe nach einem der vorherigen Ansprüche zum Verkleben von Metallen.

17. Verwendung der einkomponentigen Polyurethane nach einem der vorherigen Ansprüche zum Aufbringen auf Substrate für hitzehärtbare Beschichtungen sowie die daraus hergestellten beschichteten hitzegehärteten Substrate.
